# EUROPÄISCHE PATENTSCHRIFT

(11) **EP 2 972 582 B1**
(45) Veröffentlichungstag und Bekanntmachung des Hinweises auf die Patenterteilung: **01.02.2017**
(21) Anmeldenummer: 14709336.3
(22) Anmeldetag: 12.03.2014
(51) Int. Cl.: G03B 17/56, F16M 11/04, F16M 11/10, F16M 11/20

(54) **STATIVKOPF**
TRIPOD HEAD
TÊTE DE TRÉPIED

(30) Priorität: 15.03.2013 DE 102013004415
(43) Veröffentlichungstag der Anmeldung: 20.01.2016
(73) Patentinhaber: CULLMANN GERMANY GmbH, 90579 Langenzenn (DE)
(72) Erfinder: KOCH, Sergej, 90459 Nürnberg (DE)
(74) Vertreter: Louis Pöhlau Lohrentz
(86) Internationale Anmeldenummer: PCT/EP2014/054866
(87) Internationale Veröffentlichungsnummer: WO 2014/140114

(56) Entgegenhaltungen:
- WO-A1-2007/124929
- DE-U1-202006 014 419
- JP-A- 2007 128 011
- US-A- 4 899 189
- US-A1- 2011 108 685

## Beschreibung

Die Erfindung betrifft einen Stativkopf mit einem oder mehreren Führungsgriffen.

Stativköpfe mit einem Kugelgelenk werden vorzugsweise für photographische Kameras eingesetzt, um die Lage der Kamera in drei Achsen schwenken zu können und durch Betätigung eines Klemmhebels fixieren zu können.

Stativköpfe für Film- oder Videokameras sind vorzugsweise in zwei oder drei Achsen dreh- und/oder schwenkbar ausgebildet.
Zur besseren Handhabung können Stativköpfe stielförmige Führungsgriffe aufweisen. Diese weit hervorragenden Führungsgriffe erweisen sich beim Transport eines Stativs mit aufmontiertem Stativkopf als hinderlich, insbesondere, wenn mehrere Führungsgriffe in unterschiedlichen Richtungen von dem Stativkopf abstehen.

Die DE 1 758 793 U beschreibt einen Kugelneigekopf für Stative mit einer Aufnahmeplatte mit Kameraschraube. Die Aufnahmeplatte weist am Umfang verteilte Gewindelöcher zur Aufnahme eines Handgriffs auf, so dass der Handgriff bei Bedarf von dem Kugelneigekopf abnehmbar ist.
Die DE 1 818 880 U beschreibt einen Stativ-Neigekopf mit einem Stielgriff zur Erleichterung des Schwenkens eines eine Kamera tragenden Kopfoberteils, wobei der Stielgriff mit dem Kopfoberteil über ein feststellbares Kugelgelenk verbunden ist. Der festgestellte Stielgriff kann unabsichtlich durch Überwindung der in dem festgestellten Kugelgelenk ausgebildeten Reibkraft verstellt werden. Die DE 42 41 580 C1 beschreibt einen Kamera-Stativkopf mit einer um eine waagerechte Achse schwenkbaren Handhabe, die in unterschiedlichen Schwenklagen fixierbar ist.

Die US2011/0108685 beschreibt einen Kamera-Stativkopf.
Aufgabe der vorliegenden Erfindung ist es, einen in der Handhabung verbesserten Stativkopf der vorgenannten Art zu schaffen.
Erfindungsgemäß wird diese Aufgabe mit dem Gegenstand des Anspruchs 1 gelöst. Es wird ein Stativkopf zur Aufnahme eines optischen Geräts vorgeschlagen, wobei der Stativkopf mindestens einen Führungsgriff zur Einleitung einer Drehbewegung und/oder einer Schwenkbewegung aufweist, wobei vorgesehen ist,
dass der mindestens eine Führungsgriff mittels einer Befestigungsschraube lösbar mit dem Stativkopf verbunden ist, und
dass der mindestens eine Führungsgriff und die Befestigungsschraube durch ein länglich und flexibel ausgebildetes Sicherungselement unlösbar miteinander verbunden sind, das den mindestens einen Führungsgriff und die Befestigungsschraube zumindest teilweise durchgreift.

Durch die unverlierbare und flexible Anbindung des von dem Stativkopf gelösten mindestens einen Führungsgriffs weist der erfindungsgemäße Stativkopf nun keine hervorstehenden Elemente auf, die einen Transport oder eine Verpackung behindern.

Es kann vorgesehen sein, dass das Sicherungselement als ein Faden und/oder Seil ausgebildet ist. Der Faden und/oder das Seil können beispielsweise aus einem elastischen Kunststoff oder einem Elastomer ausgebildet sein.

Es kann auch vorgesehen sein, dass das Sicherungselement als ein Draht und/oder als eine Bowdenzugseele ausgebildet ist.

Es kann auch vorgesehen sein, dass das Sicherungselement als eine Kette und/oder ein Gelenkstab ausgebildet ist.

Das optische Gerät kann eine Film- oder Videokamera sein, und der Stativkopf kann ein Vertikaldrehlager und ein Horizontalschwenklager aufweisen. Bei dem Stativkopf kann es sich auch um einen Dreiwegekopf oder einen Kugelgelenkkopf handeln, bei dem eine Drehachse schaltbar sperrbar ist.

Es kann vorgesehen sein, dass die Befestigungsschraube als eine Stiftschraube ausgebildet ist, wobei die Befestigungsschraube einen in ein Gewindeloch des Stativkopfes einschraubbaren vorderen Gewindeabschnitt und einen in ein Gewindeloch des Führungsgriffs einschraubbaren hinteren Gewindeabschnitt aufweist.

In einer vorteilhaften Ausbildung kann vorgesehen sein, dass die Befestigungsschraube einen im Durchmesser hinter den Kerndurchmesser der Gewindeabschnitte zurückspringenden Kopfabschnitt mit Schlüsselflächen aufweist.

Die Befestigungsschraube kann ein axiales Durchgangsloch aufweisen, das von dem Sicherungselement durchgriffen ist.

Weiter kann vorgesehen sein, dass der Führungsgriff einen stielförmigen Schaft aufweist, der über ein Hülsenelement mit einem Griffstück drehstarr verbunden ist.

Der Schaft kann ein axiales Durchgangsloch aufweisen, das von dem Sicherungselement durchgriffen ist.

Ein hinterer Abschnitt des axialen Durchgangslochs kann einen solchen Durchmesser aufweisen, dass das Sicherungselement mit Spiel in dem hinteren Abschnitt bewegbar ist. Dadurch ist erreicht, dass das Sicherungselement beim Aufsetzen und Aufschrauben des Führungsgriffs auf die Befestigungsschraube nicht abgeknickt und/oder verwunden wird.

Es kann vorgesehen sein, dass das Sicherungselement gegen Herausziehen aus den die Befestigungsschraube und den Schaft des Führungsgriffs durchgreifenden Durchgangslöchern formschlüssig gesichert ist.

In einer bevorzugten Ausbildung kann vorgesehen sein, dass die beiden Endabschnitte des Sicherungselement als über den Durchmesser des die Befestigungsschraube durchgreifenden axialen Durchgangslochs und des hinteren Abschnitts des den Schaft durchgreifenden axialen Durchgangslochs hervorstehende Kopfabschnitte ausgebildet sind.

Vorteilhafterweise kann vorgesehen sein, dass der vordere Abschnitt des den Schaft durchgreifenden axialen Durchgangslochs einen größeren Durchmesser als sein hinterer Abschnitt aufweist und mit einem Innengewinde ausgebildet ist, in welches der hintere Gewindeabschnitt der Befestigungsschraube (17) einschraubbar ist.

Der hintere Endabschnitt des Schaftes kann als ein zurückspringender Befestigungsabschnitt ausgebildet sein, der in ein axiales Durchgangsloch des Hülsenelements eingreift.

Der Schaft und das Hülsenelement können stoffschlüssig miteinander verbunden sein.

Das Griffstück kann aus einem thermoplastischen Kunststoff ausgebildet sein und das Hülsenelement ein in das Griffstück eingebettetes Einlegeteil sein.

Die Erfindung wird nun anhand von Ausführungsbeispielen näher erläutert. Es zeigen
- Fig. 1: ein Ausführungsbeispiel des erfindungsgemäßen Stativkopfes in perspektivischer Darstellung;
- Fig. 2: den Stativkopf in Fig. 1 mit abgezogenen Führungsgriffen;
- Fig. 3: den Stativkopf in Fig. 1 mit herabhängenden Führungsgriffen;
- Fig. 4: den Führungsgriff in Fig. 2 in perspektivischer Darstellung;
- Fig. 5: den Führungsgriff in Fig. 4 in einer Schnittdarstellung.

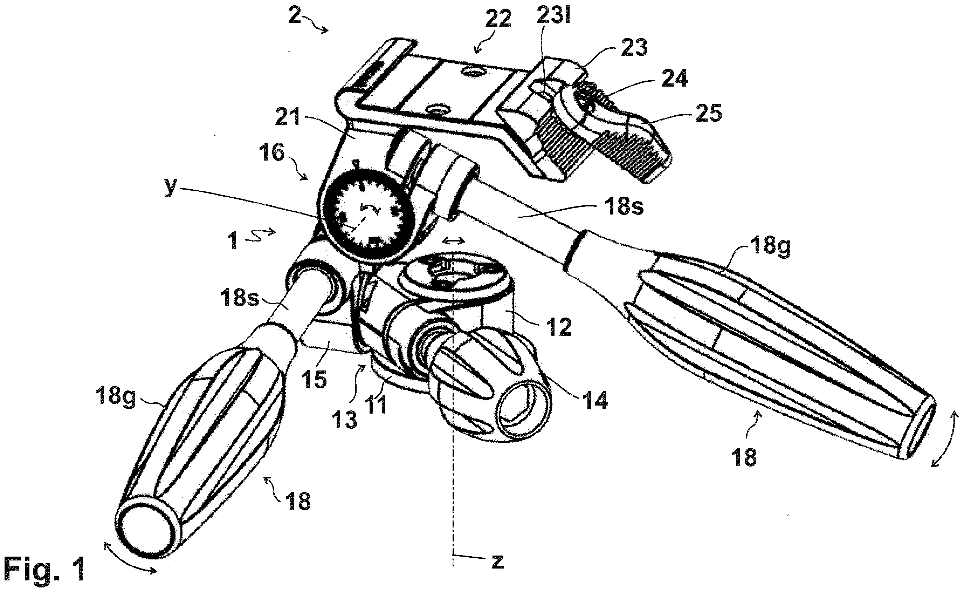

Fig. 1 zeigt einen Stativkopf 1 für eine Film- oder Videokamera mit einer Schnellspannvorrichtung 2. Bei der Videokamera kann es sich beispielsweise um eine Videokamera oder einen für Videoaufnahmen geeigneten digitalen Photoapparat handeln.

Bei dem Stativkopf 1 handelt es sich um einen um zwei senkrecht aufeinander stehende Achsen schwenkbaren Stativkopf. An dem Stativkopf 1 sind Führungsgriffe 18 angeordnet, die mittels Befestigungsschrauben 17 lösbar mit dem Stativkopf 1 verbunden sind. Die Führungsgriffe 18 sind durch jeweils einen Sicherungsfaden 19 unverlierbar mit den Befestigungsschrauben 17 verbunden.

Der Stativkopf 1 weist eine Grundplatte 11 auf, die von einer in Fig. 1 nicht dargestellten Stativschraube durchgriffen ist, mit der der Stativkopf 1 auf einem in Fig. 1 nicht dargestellten Stativ befestigt ist. Im Folgenden ist angenommen, dass die Grundplatte 11 waagerecht ausgerichtet ist.

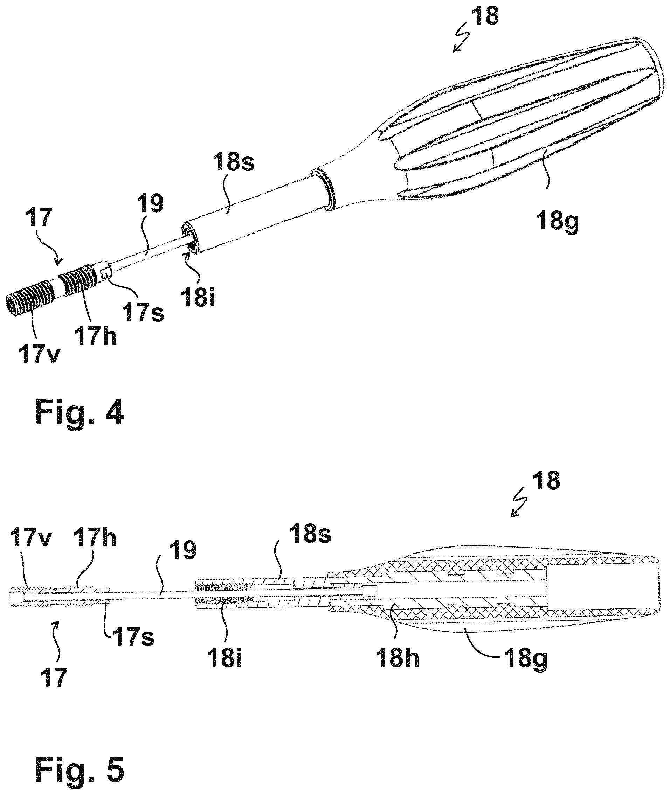

Wie Fig. 1 zu entnehmen ist, ist auf der Grundplatte 11 ein Vertikaldrehlager 12 mit einer senkrecht zur Grundplatte 11 angeordneten Drehachse z angeordnet. Der Stativkopf 1 ist mit Hilfe eines ersten Führungsgriffs 18 um die Drehachse z um 360° drehbar und bei Bedarf mittels einer an dem Vertikaldrehlager 12 angeordneten Klemmeinrichtung 13 fixierbar. Die Klemmeinrichtung 13 ist durch einen Klemmknopf 14 von einer Offenstellung in eine Klemmstellung bringbar. An dem Vertikaldrehlager 12 ist seitlich eine Lagereinrichtung 15 mit einem Gewindeloch für die Befestigungsschraube 17 (siehe Fig. 4 und 5) des ersten Führungsgriffs 18 angeordnet.

Wie Fig. 1 zu entnehmen ist, weist die Lagereinrichtung 15 weiter einen nach oben abstehenden Aufnahmeabschnitt für ein Horizontalschwenklager 16 auf. Der Stativkopf 1 ist mit Hilfe eines zweiten Führungsgriffs 18 um eine horizontale Schwenkachse y nach oben bzw. nach unten neigbar. Die Lagerschale des Horizontalschwenklagers 16 ist als eine geschlitzte Lagerschale mit Klemmarmen ausgebildet, die von der Befestigungsschraube 17 (siehe Fig. 4 und 5) des zweiten Führungsgriffs 18 durchgriffen sind. Die Befestigungsschraube 17 wirkt mit einem der Klemmarme zusammen. Mit Hilfe der Befestigungsschraube 17 ist das Lagerspiel des Horizontalschwenklagers 16 einstellbar. Über das Lagerspiel kann der Gang des Horizontalschwenklagers 16 von leichtgängig in schwergängig variiert werden, so dass der Stativkopf 1 an die Masse der aufgesetzten Film- oder Videokamera anpassbar ist.

An dem Horizontalschwenklager 16 ist eine Klemmplattenaufnahme 21 der Schnellspannvorrichtung 2 angeordnet.

Die Schnellspannvorrichtung 2 weist eine Klemmplatte 22 auf, die einstückig mit der Klemmplattenaufnahme 21 ausgebildet ist. Die Klemmplatte 22 bildet das Gestell der Schnellspannvorrichtung 2, die weiter eine in Fig. 1 nicht dargestellte Kupplungsplatte für die Film- oder Videokamera aufweist. Die Kupplungsplatte ist mit der Film- oder Videokamera über eine Befestigungsschraube lösbar verbindbar, wobei die Kupplungsplatte während des Einsatzes der Film- oder Videokamera vorzugsweise mit der Filmkamera verbunden bleibt. Wenn die Klemmplatte 22 parallel zur Grundplatte 11 des Stativkopfes 1 ausgerichtet ist, fluchtet die Drehachse z des Vertikaldrehlagers 12 mit der Achse der Befestigungsschraube der Kupplungsplatte.

Die Klemmplatte 22 weist im Wesentlichen einen rechteckförmigen Grundriss auf. Die Klemmplatte 22 ist Teil einer prismenförmigen Kulissenführung mit seitlichen Wänden und einer Grundfläche. Die Kulissenführung ist zur Führung und Klemmung der Kupplungsplatte vorgesehen. In dem in den Fig. 1 bis 3 dargestellten Ausführungsbeispiel ist die Kulissenführung als eine Schwalbenschwanzführung ausgebildet. Die Oberseite der Klemmplatte 22 bildet die Grundfläche der Schwalbenschwanzführung. Eine erste Kulisse der Schwalbenschwanzführung ist als ein aus der Oberseite der Klemmplatte 22 hervorspringender wandförmiger erster Seitenabschnitt ausgebildet, der an der Innenseite mit einer für die Schwalbenschwanzführung charakteristischen im Querschnitt dreieckförmigen Nut ausgebildet ist. Die eine Fläche der Nut fluchtet mit der Oberseite der Klemmplatte 22, die andere Fläche der Nut ist zur Oberseite geneigt und schließt mit ihr einen spitzen Winkel ein. Die geneigte andere Fläche bildet eine erste Anschlags- und Führungsfläche für die Kupplungsplatte.

Eine zweite Kulisse der Schwalbenschwanzführung ist als eine bewegliche Druckplatte 23 ausgebildet, die an einem dem vorgenannten Seitenabschnitt gegenüberliegenden zweiten Seitenabschnitt der Klemmplatte 22 gleitbar ausgebildet ist und eine zweite Anschlags- und Führungsfläche für die Kupplungsplatte bildet. Der zweite Seitenabschnitt der Klemmplatte 22 ist zur Oberseite der Klemmplatte geneigt und schließt mit ihr einen spitzen Winkel ein, der betragsgleich zu dem Nutwinkel an dem ersten Seitenabschnitt der Klemmplatte 22 ist. Die Druckplatte 23 weist ein Langloch 23l auf, das von einer Klemmschraube 24 durchgriffen ist, die in ein in dem zweiten Seitenabschnitt der Klemmplatte 22 angeordnetes Gewindeloch eingreift. Die Längsachse der Klemmschraube 24 steht senkrecht zu der der Oberseite des zweiten Seitenabschnitts.

Die Druckplatte 23 weist weiter zwei zu beiden Längsseiten des Langlochs angeordnete nutförmige Ausnehmungen auf, die mit in der Klemmplatte 22 ausgebildeten Ausnehmungen Aufnahmeräume für Schraubendruckfedern bilden. Die Schraubendruckfedern bringen die Druckplatte 23 in eine Lage, in der ein Abschnitt der Druckplatte 23 über die Oberseite der Klemmplatte 22 hervorsteht und die weiter oben beschriebene zweite Anschlags- und Führungsfläche für die Kupplungsplatte bildet. Dabei liegt der untere Abschnitt des Langlochs am Außenumfang der Klemmschraube 24 an.

Die Klemmschraube 24 ist mit einem Klemmhebel 25 starr verbunden.

Zwischen der bodenseitigen Stirnseite des Klemmhebels 25 und der Druckplatte 23 ist ein zylinderförmiges Druckstück angeordnet, das von der Klemmschraube 24 durchgriffen ist und die durch die Klemmschraube 24 ausgebildete Klemmkraft auf die Druckplatte 23 überträgt.

Im Folgenden werden der Aufbau der Befestigungsschraube 17 und des Führungsgriffs anhand der Fig. 5 näher beschrieben.

Die Befestigungsschraube 17 ist als eine Stiftschraube ausgebildet und weist einen in ein Gewindeloch des Stativkopfes 1 einschraubbaren vorderen Gewindeabschnitt 17v und einen in ein Gewindeloch des Führungsgriffs 18 eingreifenden hinteren Gewindeabschnitt 17h auf. Der an den hinteren Gewindeabschnitt 17h angrenzende Kopfabschnitt der Befestigungsschraube weist Schlüsselflächen 17s für einen Maulschlüssel auf. Der Durchmesser des Kopfabschnitts entspricht dem Kerndurchmesser der beiden Gewindeabschnitte 17h, 17v der Befestigungsschraube 17. Die Befestigungsschraube 17 weist weiter ein axiales Durchgangsloch auf, das von dem Sicherungsfaden 19 durchgriffen ist.

Die Führungsgriffe 18 weisen einen stielförmigen Schaft 18s auf, der über ein Hülsenelement 18h mit einem Griffstück 18g drehstarr verbunden ist.

Der Schaft 18s weist ein axiales Durchgangsloch auf, das wie das Durchgangsloch der Befestigungsschraube 17 von dem Sicherungsfaden 19 durchgriffen ist. Der hintere Abschnitt des Durchgangslochs weist einen solchen Durchmesser auf, dass der Sicherungsfaden 19 mit Spiel in dem hinteren Abschnitt bewegbar ist. Der vordere Abschnitt des Durchgangslochs weist einen größeren Durchmesser als der hintere Abschnitt auf und ist mit einem Innengewinde 18i ausgebildet, in welches der hintere Gewindeabschnitt 17h der Befestigungsschraube 17 einschraubbar ist.

Der hintere Endabschnitt des Schaftes 18s ist als ein zurückspringender Befestigungsabschnitt ausgebildet, der in ein axiales Durchgangsloch des Hülsenelements 18h eingreift. Das Hülsenelement 18h ist aus einem Metall, beispielsweise Aluminium, ausgebildet, und mit dem aus einem Thermoplast ausgebildeten Griffstück 18g umspritzt. Der Schaft 18s und das Hülsenelement 18h sind stoffschlüssig miteinander verbunden, beispielsweise durch eine Klebverbindung.

Der Sicherungsfaden 19 ist gegen Herausziehen formschlüssig gesichert, indem seine beiden Endabschnitte als über den Durchmesser der in der Befestigungsschraube 17 und dem Schaft 18s des Führungsgriffs 18 ausgebildeten Durchgangslöcher hervorstehende angeformte Kopfabschnitte ausgebildet sind. Der Sicherungsfaden 19 kann beispielsweise aus einem thermoplastischen Kunststoff ausgebildet sein. Die Kopfabschnitte des Sicherungsfadens 19 können beispielsweise durch plastisches Umformen mit einem erhitzten Formwerkzeug ausgebildet sein.

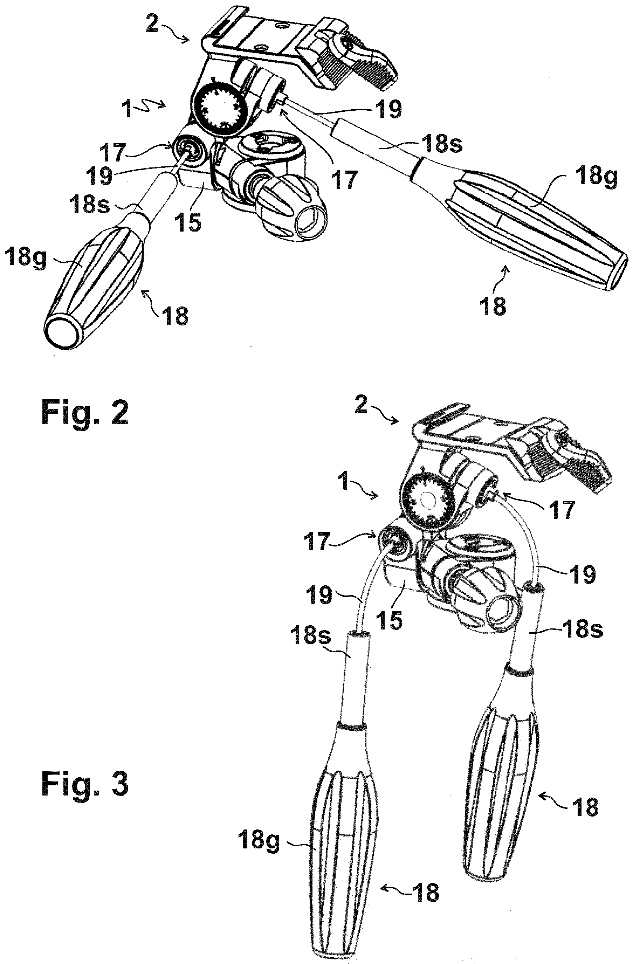

Der Führungsgriff 18 kann nach dem Lösen von der Befestigungsschraube 17 in eine beliebige Schwenklage zu dem Stativkopf 1 bzw. dem Stativ gebracht werden, wie in Fig. 2 und 3 gezeigt, und ist wegen des Sicherheitsfadens 19 unverlierbar.

### Bezugszeichenliste

- 1: Stativkopf
- 2: Schnellspannvorrichtung
- 11: Grundplatte
- 12: Vertikaldrehlager
- 13: Klemmeinrichtung
- 14: Klemmknopf
- 15: Lagerplatte
- 16: Horizontalschwenklager
- 17: Befestigungsschraube
- 17h: hinterer Gewindeabschnitt
- 17s: Schlüsselfläche
- 17v: vorderer Gewindeabschnitt
- 18: Führungsgriff
- 18g: Griffstück
- 18h: Hülsenelement
- 18i: Innengewinde
- 18s: Schaft
- 19: Sicherungsfaden
- 21: Klemmplattenaufnahme
- 22: Klemmplatte
- 23: Druckplatte
- 23l: Langloch
- 24: Klemmschraube
- 25: Klemmhebel

## Patentansprüche

1. Stativkopf (1) zur Aufnahme eines optischen Geräts, wobei der Stativkopf (1) mindestens einen Führungsgriff (18) zur Einleitung einer Drehbewegung und/oder einer Schwenkbewegung aufweist,
wobei
der mindestens eine Führungsgriff (18) mittels einer Befestigungsschraube (17) lösbar mit dem Stativkopf (1) verbunden ist, und dadurch kekennzeichnet,
dass der mindestens eine Führungsgriff (18) und die Befestigungsschraube (17) durch ein länglich und flexibel ausgebildetes Sicherungselement (19) unlösbar miteinander verbunden sind, indem das Sicherungselement (19) den mindestens einen Führungsgriff (18) und die Befestigungsschraube (17) zumindest teilweise durchgreift, sodass im Falle des von dem Stativkopf (1) gelösten mindestens einen Führungsgriffs (18) eine unverlierbare und flexible Anbindung des von dem Stativkopf (1) gelösten mindestens einen Führungsgriffs (18) ausgebildet wird, und
• dass das Sicherungselement (19) gegen Herausziehen aus den die Befestigungsschraube (17) und den Schaft (18s) des Führungsgriffs (18) durchgreifenden Durchgangslöchern formschlüssig gesichert ist, und
• dass die beiden Endabschnitte des Sicherungselement (19) als hervorstehende Kopfabschnitte ausgebildet sind, die hervorstehen über den Durchmesser des die Befestigungsschraube (17) durchgreifenden axialen Durchgangslochs und über den Durchmesser des hinteren Abschnitts des den Schaft (18s) durchgreifenden axialen Durchgangslochs.

2. Stativkopf nach Anspruch 1,
**dadurch gekennzeichnet,**
**dass** das Sicherungselement (19) als ein Faden und/oder Seil ausgebildet ist.

3. Stativkopf nach Anspruch 1,
**dadurch gekennzeichnet,**
**dass** das Sicherungselement (19) als ein Draht und/oder als eine Bowdenzugseele ausgebildet ist.

4. Stativkopf nach Anspruch 1,
**dadurch gekennzeichnet,**
**dass** das Sicherungselement (19) als eine Kette und/oder ein Gelenkstab ausgebildet ist.

5. Stativkopf (1) nach einem der vorangehenden Ansprüche,
**dadurch gekennzeichnet,**
**dass** das optische Gerät eine Film- oder Videokamera oder ein für Videoaufnahmen geeigneter digitaler Photoapparat ist, und
**dass** der Stativkopf (1) ein Vertikaldrehlager (12) und ein Horizontalschwenklager (16) aufweist.

6. Stativkopf nach einem der vorangehenden Ansprüche,
**dadurch gekennzeichnet,**
**dass** die Befestigungsschraube (17) als eine Stiftschraube ausgebildet ist, wobei die Befestigungsschraube (17) einen in ein Gewindeloch des Stativkopfes (1) einschraubbaren vorderen Gewindeabschnitt (17v) und einen in ein Gewindeloch des Führungsgriffs (18) einschraubbaren hinteren Gewindeabschnitt (17h) aufweist.

7. Stativkopf nach Anspruch 6,
**dadurch gekennzeichnet,**
**dass** die Befestigungsschraube (17) einen im Durchmesser hinter den Kerndurchmesser der Gewindeabschnitte (17h, 17v) zurückspringenden Kopfabschnitt mit Schlüsselflächen (17s) aufweist.

8. Stativkopf nach Anspruch 6 oder 7,
**dadurch gekennzeichnet,**
**dass** die Befestigungsschraube (17) ein axiales Durchgangsloch aufweist, das von dem Sicherungselement (19) durchgriffen ist.

9. Stativkopf nach einem der vorangehenden Ansprüche,
**dadurch gekennzeichnet,**
**dass** der Führungsgriff (18) einen stielförmigen Schaft (18s) aufweist, der über ein Hülsenelement (18h) mit einem Griffstück (18g) drehstarr verbunden ist.

10. Stativkopf nach Anspruch 9,
**dadurch gekennzeichnet,**
**dass** der Schaft (18s) ein axiales Durchgangsloch aufweist, das von dem Sicherungselement (19) durchgriffen ist.

11. Stativkopf nach Anspruch 10,
**dadurch gekennzeichnet,**
**dass** ein hinterer Abschnitt des axialen Durchgangslochs einen solchen Durchmesser aufweist, dass das Sicherungselement (19) mit Spiel in dem hinteren Abschnitt bewegbar ist.

12. Stativkopf nach einem der Ansprüche 10 und 11,
**dadurch gekennzeichnet,**
**dass** der vordere Abschnitt des den Schaft (18s) durchgreifenden axialen Durchgangslochs einen größeren Durchmesser als sein hinterer Abschnitt aufweist und mit einem Innengewinde (18i) ausgebildet ist, in welches der hintere Gewindeabschnitt (17h) der Befestigungsschraube (17) einschraubbar ist.

13. Stativkopf nach einem der Ansprüche 9 bis 12,
**dadurch gekennzeichnet,**
**dass** der hintere Endabschnitt des Schaftes (18s) als ein zurückspringender Befestigungsabschnitt ausgebildet ist, der in ein axiales Durchgangsloch des Hülsenelements (18h) eingreift.

14. Stativkopf nach Anspruch 13,
**dadurch gekennzeichnet,**
**dass** der Schaft (18s) und das Hülsenelement (18h) stoffschlüssig miteinander verbunden sind.

15. Stativkopf nach einem der Ansprüche 9 bis 14,
**dadurch gekennzeichnet,**
**dass** das Griffstück (18g) aus einem thermoplastischen Kunststoff ausgebildet ist und das Hülsenelement (18h) ein in das Griffstück (18g) eingebettetes Einlegeteil ist.

## Claims

1. Tripod head (1) for receiving an optical device, wherein the tripod head (1) has at least one guide handle (18) for initiating a rotational movement and/or a swivel movement,
wherein the at least one guide handle (18) is connected detachably to the tripod head (1) by means of a fixing screw (17), and,
**characterised in that**
• the at least one guide handle (18) and the fixing screw (17) are connected non-detachably to each other by an elongatedly and flexibly formed safety element (19), by the safety element (19) at least partially penetrating the at least one guide handle (18) and the fixing screw (17) such that, in the event of the at least one guide handle (18) being detached from the tripod head (1), a captive and flexible connection of the at least one guide handle (18) detached from the tripod head (1) is formed, and
• the safety element (19) is positively secured against being pulled out from the through holes penetrating the fixing screw (17) and the shaft (18s) of the guide handle (18), and
• the two end sections of the safety element (19) are formed as protruding head sections which protrude across the diameter of the axial through hole penetrating the fixing screw (17) and across the diameter of the rear section of the axial through hole penetrating the shaft (18s).

2. Tripod head according to claim 1,
**characterised in that**
the safety element (19) is formed as a thread and/or rope.

3. Tripod head according to claim 1,
**characterised in that**
the safety element (19) is formed as a wire and/or as a Bowden cable core.

4. Tripod head according to claim 1,
**characterised in that**
the safety element (19) is formed as a chain and/or a joint rod.

5. Tripod head (1) according to one of the preceding claims,
**characterised in that**
the optical device is a film or video camera or a digital camera which is suitable for video recording, and the tripod head (1) has a vertical pivot bearing (12) and a horizontal swivel bearing (16).

6. Tripod head according to one of the preceding claims,
**characterised in that**
the fixing screw (17) is formed as a stud screw, wherein the fixing screw (17) has a front threaded section (17v) which is able to be screwed into a threaded hole of the tripod head (1) and a rear threaded section (17h) which is able to be screwed into a threaded hole of the guide handle (18).

7. Tripod head according to claim 6,
**characterised in that**
the fixing screw (17) has a head section with flats (17s) recessed in diameter behind the core diameters of the threaded sections (17h, 17v).

8. Tripod head according to claim 6 or 7,
**characterised in that**
the fixing screw (17) has an axial through hole which is penetrated by the safety element (19).

9. Tripod head according to one of the preceding claims,
**characterised in that**
the guide handle (18) has a stem-like shaft (18s) which is connected in a non-rotatable manner to a handle piece (18g) by a sleeve element (18h).

10. Tripod head according to claim 9,
**characterised in that**
the shaft (18s) has an axial through hole which is penetrated by the safety element (19).

11. Tripod head according to claim 10,
**characterised in that**
a rear section of the axial through hole has such a diameter that the safety element (19) is able to move with play in the rear section.

12. Tripod head according to one of claims 10 and 11,
**characterised in that**
the front section of the axial through hole penetrating the shaft (18s) has a larger diameter than its rear section and is formed with an internal thread (18i), into which the rear threaded section (17h) of the fixing screw (17) is able to be screwed.

13. Tripod head according to one of claims 9 to 12,
**characterised in that**
the rear end section of the shaft (18s) is formed as a recessed fixing section which engages with an axial through hole of the sleeve element (18h).

14. Tripod head according to claim 13,
**characterised in that**
the shaft (18s) and the sleeve element (18h) are integrally connected to each other.

15. Tripod head according to one of claims 9 to 14,
**characterised in that**
the handle piece (18g) is formed from a thermoplastic plastic and the sleeve element (18h) is an insert component embedded into the handle piece (18g).

## Revendications

1. Tête de trépied (1) pour le logement d'un appareil optique, la tête de trépied (1) comprenant au moins une poignée de guidage (18) pour l'initiation d'un mouvement de rotation et/ou d'un mouvement de pivotement,
l'au moins une poignée de guidage (18) étant relié au moyen d'une vis de fixation (17) de manière amovible avec la tête de trépied (1), et
**caractérisé en ce que**
l'au moins une poignée de guidage (18) et la vis de fixation (17) sont reliées entre elles de manière non amovible par un élément de sécurité (19) allongé et flexible,
grâce au fait que l'élément de sécurité (19) travers au moins partiellement l'au moins une poignée de guidage (18) et la vis de fixation (17) de façon à établir, dans le cas où l'au moins une poignée de guidage (18) est détachée de la tête de trépied (1), une liaison imperdable et flexible de l'au moins une poignée de guidage (18) détachée de la tête de trépied (1) et
• **en ce que** l'élément de sécurité (19) est sécurisé par complémentarité de forme contre une extraction hors des trous de passage traversant la vis de fixation (17) et la tige (18s) de la poignée de guidage (18) et
• **en ce que** les deux portions d'extrémité de l'élément de sécurité (19) sont conçues comme des portions de têtes en saillie, qui dépassent du diamètre du trou de passage axial traversant la vis de fixation (17) et du diamètre de la portion arrière du trou de passage axial traversant la tige (18s).

2. Tête de trépied selon la revendication 1,
**caractérisée en ce que**
l'élément de sécurité (19) est conçu comme un filament et/ou un câble.

3. Tête de trépied selon la revendication 1,
**caractérisée en ce que**
l'élément de sécurité (19) est conçu comme un fil ou comme une âme de câble Bowden.

4. Tête de trépied selon la revendication 1,
**caractérisée en ce que**
l'élément de sécurité (19) est conçu comme une chaîne et/ou une tige articulée.

5. Tête de trépied (1) selon l'une des revendications précédentes,
**caractérisée en ce que**
l'appareil optique est une caméra de film ou une caméra vidéo ou un appareil photo numérique conçu pour effectuer des enregistrements vidéos et **en ce que** la tête de trépied (1) comprend un palier rotatif vertical (12) et un palier pivotant horizontal (16).

6. Tête de trépied selon l'une des revendications précédentes,
**caractérisée en ce que**
la vis de fixation (17) est conçue comme une vis sans tête, la vis de fixation (17) comprenant une portion filetée avant (17v) pouvant être vissée dans un trou fileté de la tête de trépied (1) et une portion filetée arrière (17h) pouvant être vissée dans un trou fileté de la poignée de guidage (18).

7. Tête de trépied selon la revendication 6,
**caractérisée en ce que**
la vis de fixation (17) comprend une portion de tête, en retrait en ce qui concerne le diamètre derrière le diamètre central des portions filetées (17h, 17v), avec des surfaces de clés (17s).

8. Tête de trépied selon la revendication 6 ou 7,
**caractérisée en ce que**
la vis de fixation (17) comprend un trou de passage axial qui est traversé par l'élément de sécurité (19).

9. Tête de trépied selon l'une des revendications précédentes,
**caractérisée en ce que**
la poignée de guidage (18) comprend une tige (18s) qui est reliée de manière solidaire en rotation, par l'intermédiaire d'un élément de manchon (18h), avec un élément de poignée (18g).

10. Tête de trépied selon la revendication 9,
**caractérisée en ce que**
la tige (18s) comprend un trou de passage axial qui est traversé par l'élément de sécurité (19).

11. Tête de trépied selon la revendication 10,
**caractérisée en ce que**
une portion arrière du trou de passage axial présente un diamètre tel que l'élément de sécurité (19) est mobile avec un jeu dans la portion arrière.

12. Tête de trépied selon l'une des revendications 10 et 11,
**caractérisée en ce que**
la portion avant du trou de passage axial traversant la tige (18s) présente un diamètre supérieur à celui de sa portion arrière et est réalisée avec un filetage interne (18i), dans lequel la portion filetée arrière (17h) de la vis de fixation (17) peut être vissée.

13. Tête de trépied selon l'une des revendications 9 à 12,
**caractérisée en ce que**
la portion d'extrémité arrière de la tige (18s) est conçue comme une portion de fixation en retrait qui s'emboîte dans un trou de passage axial de l'élément de manchon (18h).

14. Tête de trépied selon la revendication 13,
**caractérisée en ce que**
la tige (18s) et l'élément de manchon (18h) sont reliés entre eux par liaison de matière.

15. Tête de trépied selon l'une des revendications 9 à 14,
**caractérisée en ce que**
l'élément de poignée (18g) est constitué d'une matière plastique thermoplastique et l'élément de manchon (18h) est un insert intégré dans l'élément de poignée (18g).
